Europäisches Patentamt

European Patent Office

Office européen des brevets

(11) Veröffentlichungsnummer: **0 467 154 A2**

# EUROPÄISCHE PATENTANMELDUNG

(21) Anmeldenummer: **91111063.3**

(22) Anmeldetag: **04.07.91**

(51) Int. Cl.5: **G03B 17/30**, G03C 3/00

(30) Priorität: **17.07.90 DE 4022666**

(43) Veröffentlichungstag der Anmeldung:
**22.01.92 Patentblatt 92/04**

(84) Benannte Vertragsstaaten:
**DE FR GB IT NL**

(71) Anmelder: **Agfa-Gevaert AG**

**W-5090 Leverkusen 1(DE)**

(72) Erfinder: **Barth, Josef**
**Badergasse 6**
**W-8301 Herrngiersdorf(DE)**
Erfinder: **Brunner, Erwin**
**Oberbuch 4 1/3**
**W-8428 Rohr(DE)**

(54) **Spule für bandförmige Aufzeichnungsträger, insbesondere für fotografische Filme.**

(57) Eine Spule für bandförmige Aufzeichnungsträger, insbesondere für fotografische Filme, mit einem im Spulenkern angeordneten Schlitz und wenigstens einem darin vorgesehenen Haken zum Befestigen des in den Schlitz eingeschobenen Bandendes, wobei Ober- und Unterseite des Hakens an dem der Filmeinschubseite gegenüberliegenden Ende durch eine schräge Fläche so miteinander verbunden sind, daß der Haken zum Hakenende hin spitz zuläuft und die Hakenoberfläche länger ist als die Hakenunterseite, und wobei beliebige, parallel zur Hakenunterseite durch die schräge Fläche gelegte Schnitte bogenförmige Schnittlinien ergeben, gewährleistet ein sichereres Einschießen des Filmendes.

FIG.1

Die Erfindung betrifft eine Spule für bandförmige Aufzeichnungsträger, insbesondere für fotografische Filme, mit einem im Spulenkern angeordneten Schlitz und wenigstens einem darin vorgesehenen Haken zum Befestigen des in den Schlitz eingeschobenen Bandendes, wobei das Bandende ein Loch aufweist, das auf dem Bandende so angeordnet ist, daß sich seine Lage beim Einschieben in den Spulenschlitz mit der Position des Hakens deckt und der Haken nach dem Einschieben des Bandendes in das Loch eingreifen kann.

Derartige Spulen sind bekannt und oftmals verbessert worden. Eine derzeit benutzte Spule wird beispielsweise in EP-A 186 824 beschrieben. Bei dem in dieser Spule angeordnete Haken sind Ober- und Unterseite des Hakens an dem der Filmeinschubseite gegenüberliegenden Ende durch eine schräge Fläche so miteinander verbunden, daß der Haken zum Hakenende hin spitz zuläuft und die Hakenoberfläche länger ist als die Hakenunterseite. Das Bandende wird über die Oberseite eingeschoben und die Filmlochkante gleitet beim Zurückziehen über die in den Hakenfuß übergehende Unterseite, um schließlich vom Hakenfuß gehalten zu werden. Der Bereich zwischen Hakenunterseite und Spulenkern, abgeschlossen nach einer Seite durch den Hakenfuß und offen nach der gegenüberliegenden Seite, wird auch als Hakenspalt bezeichnet.

Um das Hineingleiten des Bandendes in den Hakenspalt zu erleichtern, ist das Hakenende in der Draufsicht gesehen abgerundet, wobei die Abrundung etwa dem Radius des Filmbandloches entspricht.

Das Einschieben und Zurückziehen des Bandendes wird bei modernen Hochleistungsautomaten mit einer so großen Geschwindigkeit vollzogen, daß bei den herkömmlichen Spulen ein bestimmter Anteil von Bandenden beim schnellen Zurückziehen nicht in den Hakenspalt gleitet, sondern an der Abschrägung des Hakenendes hängenbleibt und deswegen an der Rückseite des Spulenkerns aus dem Schlitz heraussteht.

Dieser Fehler führt zu Deformationen des aufgewickelten Films, die sich als Schleierbildung auf dem Film auswirken. Gravierend ist dabei, daß das unvollkommene Einziehen des Bandendes in den Spulenkern am fertig gewickelten Band nicht bemerkt und damit das fehlerhafte Stück nicht aussortiert werden kann.

Aufgabe der Erfindung war es, diesen Mangel zu beheben, ohne daß andere Mängel auftreten.

Die Aufgabe wird überraschenderweise dadurch gelöst, daß die Abschrägung derart ist, daß beliebige, parallel zur Hakenunterseite durch die schräge Fläche gelegte Schnitte bogenformige Schnittlinien ergeben. Vorzugsweise sind die Schnittlinien Kreisbögen, deren Radius gleich dem Radius des Befestigungsloches im Bandende ist.

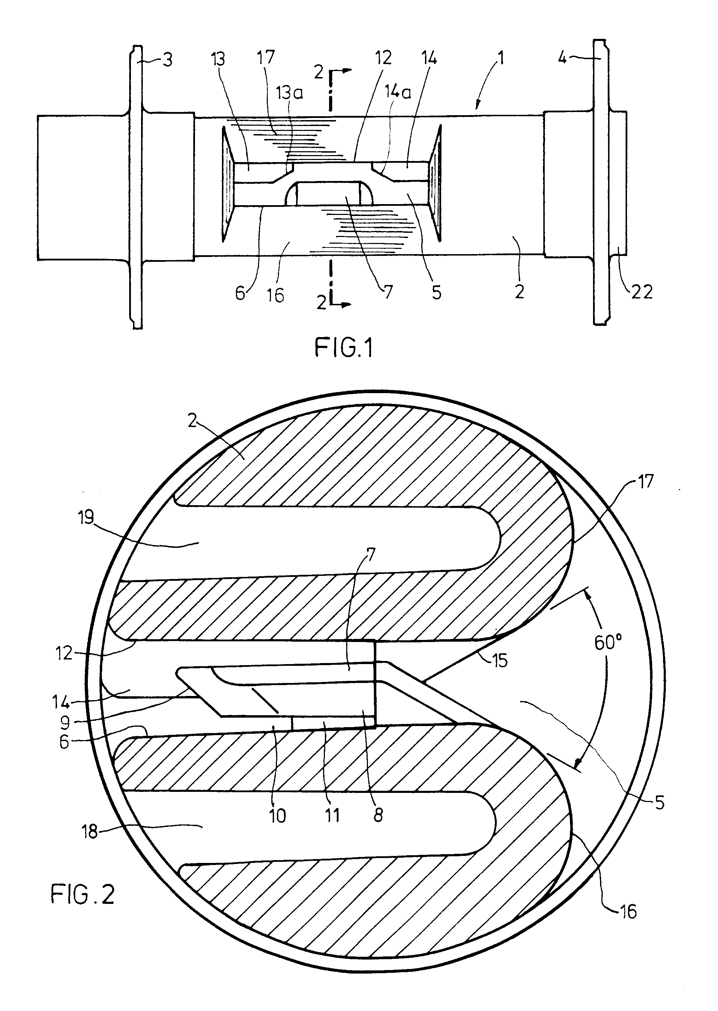

Fig. 1 eine Filmspule in der Ansicht mit Blick auf die Filmeinschubseite,

Fig. 2 den Gegenstand der Fig. 1 im Querschnitt längs der Linie 2-2 (ohne Flansche), erfindungsgemäß,

Fig. 3 die gleiche Filmspule im Längsschnitt längs der Linie 3-3 von Fig. 4, erfindungsgemäß,

Fig. 4 den Gegenstand der Fig. 1 teils mit Schnitt, teils in der Ansicht mit Blick auf die der Filmeinschubseite entgegengesetzte Seite, erfindungsgemäß,

Fig. 5 Ansicht einer Hakenunterseite herkömmlicher Art,

Fig. 6 Ansicht einer Hakenunterseite nach der Erfindung.

Die aus Kunststoff gespritzte Filmspule 1 besitzt einen im wesentlichen zylindrisch geformten Spulenkern 2 mit zwei seitlichen Flanschen 3 und 4.

Im Spulenkern 2 befindet sich ein durch die Kernmitte axial verlaufender Schlitz 5, der zum Einschieben und Befestigen des Endstückes eines nicht dargestellten fotografischen Rollfilmes, z.B. eines Kleinbildfilmes, dient, der nach der Befestigung auf die Filmspule aufgewickelt wird, wozu das Filmende in Fig. 2 von rechts her in den Spulenschlitz 5 eingeführt und nach der Befestigung des Filmes in diesem Schlitz die Filmspule 1 in der Darstellung in Fig. 2 entgegen dem Uhrzeigersinn gedreht wird.

An der unteren Wand 6 des Spulenschlitzes 5 ist der zur Filmbefestigung dienende Filmhaken 7 angespritzt, der einen Hakenschaft 8 und einen Hakenkopf 9 besitzt. Der Hakenschaft 8 besitzt auf der Seite des Filmeinschubes eine Rampe, an welcher das einzuschiebende Filmende bei der Einsetzbewegung aufgleiten kann, bis es nach Fortsetzung der Einschubbewegung mit einem als Langloch entsprechend ausgebildeten Befestigungsloch über den Haken 7 fällt und nach leichtem Zurückziehen des Filmes sich im Hakenspalt 10 zwischen dem Hakenkopf 9 und der Schlitzwand 6 verhakt. In an sich bekannter Weise ist der Hakenfuß 11 der Form des Langloches des Filmes angepaßt, so daß sich die Ränder des Filmes im Langloch an den Hakenfuß 11 satt anlegen können.

An der oberen Wand 12 des Schlitzes 5 sind zwei Niederhalter 13, 14 angespritzt, welche auf der Seite des Filmeinschubes ebenfalls Rampen 15 aufweisen, die zur Oberseite des Hakens 7 hin angeschrägt sind (Flächen 13a, 14a). Die Niederhalter 13, 14 bewirken, daß die seitlichen Ränder des Filmendes beim Einschub in den Schlitz 5 nach unten gewölbt werden, wenn das Filmende in der Längsachse des Filmes beim Aufgleiten auf die Rampe des Filmhakens 7 nach oben gedrückt wird. Sobald der Film mit seinem Langloch in den Haken

7 eingefallen ist, wird er aufgrund seiner Eigensteifigkeit wieder plan. Die Niederhalter 13, 14 verhindern dann, daß der Film mit seinem Langloch aus dem Sperrhaken 7 sich wieder herausheben kann.

Die Rampe am Haken 7 sowie die Rampen 15 an den Niederhaltern 13, 14 erlauben ein müheloses Einschieben des Filmendes in den Schlitz 5, ohne daß der Film dabei gestaucht wird. Zu diesem Zweck sind die vorgenannten Rampen relativ flach ausgeführt. Sie schließen einen Winkel von ca. 60° ein, der etwa symmetrisch zu der in Fig. 2 dargestellten Spulenmittelebene M liegt.

Aus Fig. 2 ist ferner ersichtlich, daß der zwischen Hakenkopf 9 und Schlitzwand 6 gelegene Hakenspalt 10, in der sich der Film verhakt, unterhalb der Spulenmittelebene angeordnet ist, d.h. auf der Seite, über welche bei der Konfektionierung die Aufwicklung erfolgt. Die Ausnehmung 10 übersteigt in ihrer lichten Weite die Filmdicke nur wenig.

Selbstverständlich können anstelle eines einzigen Filmhakens 7 auch mehrere nebeneinanderliegende Filmhaken vorgesehen werden, wobei das Filmende dann auch eine entsprechende Anzahl von Langlöchern aufweist.

An die Wände 6, 12 des Spulenschlitzes 5 schließen sich Übergangsflächen 16, 17 an, die wiederum in die Außenflächen des Spulenkerns 2 übergehen. Dabei bildet sich weder in Richtung zu den Schlitzflächen 6, 12 noch in Richtung zu den zylindrischen Außenflächen des Spulenkerns 2 ein Knick. Die Übergangsflächen 16, 17 erstrecken sich im Querschnitt gemäß Fig. 2 jeweils über einen Winkelbereich von ca. 135° und bilden innerhalb dieses Bereiches Mantelflächen von Kreiszylindern mit einem Radius, der im Ausführungsbeispiel gemäß Fig. 2 etwa das 0,38-fache des Radius der zylindrischen Mantelfläche des Spulenkerns 2 beträgt.

Durch diese Ausgestaltung wird erreicht, daß die Übergangsflächen 16, 17 den größtmöglichen Radius erhalten, ohne daß es im Anschluß an die Schlitzflächen 6, 12 oder im Anschluß an die Außenkontur des Spulenkerns 2 zu mehr oder weniger scharf ausgeprägten Knicklinien oder starken Krümmungen kommt. Vielmehr ist die Krümmung im Übergang von den planen Schlitzwänden 6, 12 zu den zylindrischen Außenflächen des Spulenkerns 2 nahezu gleichbleibend und so gering wie möglich.

Hierdurch wird erreicht, daß der Film beim Aufwickeln je nach der Drehrichtung der Spule 1 entweder an der Übergangsfläche 16 oder an der Übergangsläche 17 satt anliegt und nur die minimale Krümmung annimmt, wie sie durch die Krümmung der Übergangsfläche 16 bzw. 17 vorgegeben ist. Vorzugsweise soll die Aufwicklung über die Übergangsfläche 16 erfolgen. Auch wenn der Film bei längerer Lagerung im aufgespulten Zustand diese vorgegebene Krümmung irreversibel annimmt, ist sie doch nicht so groß, daß während des maschinellen Abwickelns beim ruckartigen Anhalten des Filmes dessen Zugbelastbarkeit überbeansprucht wird. Hinzu kommt, daß bei diesem Vorgang aufgrund der Anordnung des Hakens 7 mit seinem Hakenspalt 10 unterhalb der Spulenmittelebene die Filmspule am Ende des Abwickelvorganges unter der Wirkung des Filmzuges eine Winkelstellung erreicht, bei welcher der Film sich an die als Schulter dienende Übergangsfläche 16 flächenhaft anlegt.

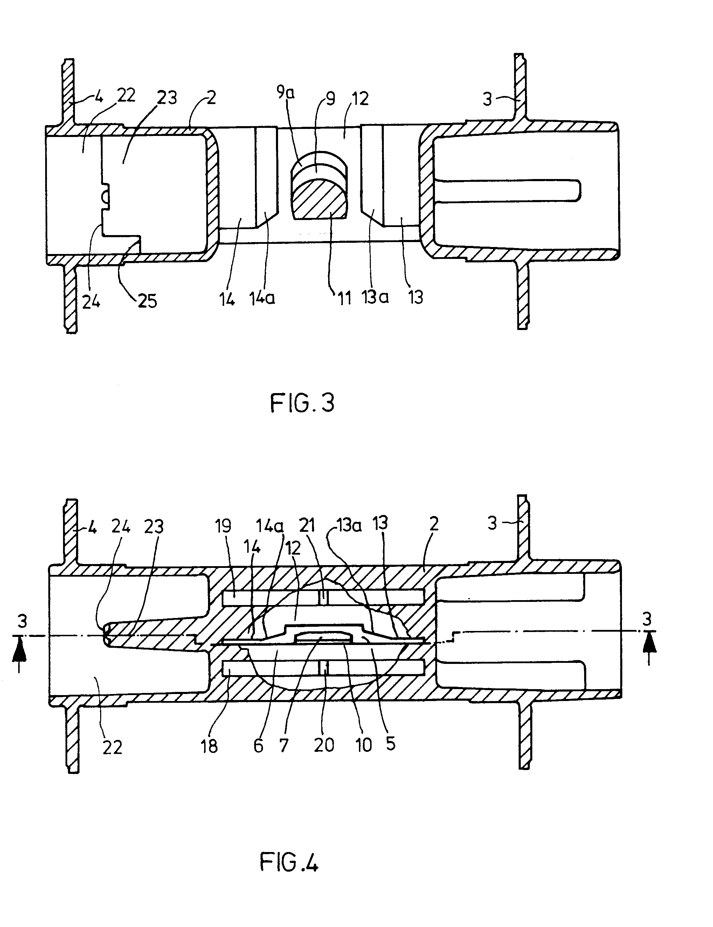

Wie aus Fig. 2 und 4 ersichtlich ist, besitzt die Filmspule 1 aus Gründen der Materialersparnis sowie aus spritztechnischen Gründen zwischen dem Spulenschlitz 5 und den Außenflächen des Spulenkerns 2 weitere Schlitze 18, 19, deren Öffnung nach außen entgegengesetzt zur Filmeinschubseite liegt. Die Schlitze 18, 19 erstrecken sich ebenfalls parallel zur Mittelachse der Filmspule und sind in der Mitte durch Querstege 20, 21 unterteilt. Diese Querstege verhindern, daß bei der Lagerung und beim Transport der leeren Filmspulen als lose Schüttware vor der Konfektionierung Seitenflansche 3 bzw. 4 einer Spule sich in den Schlitzen 18 bzw. 19 anderer Spulen verhaken.

Auf der Seite des Spulenflansches 4 setzt sich der Spulenkern 2 in ein Nabenteil 22 fort, in welchem ein Mitnehmersteg 23 angeordnet ist. Dieser Steg kann zum Antrieb der Spule in der Kamera oder in Verarbeitungsgeräten von kamera- bzw. geräteseitigen Filmspulenschlüsseln erfaßt werden, wodurch die Antriebsbewegung von der Kamera bzw. Konfektionierungs- oder Verarbeitungsmaschine auf die Filmspule übertragen wird.

Damit sich der kamera- bzw. maschinenseitige Antriebsschlüssel vom Mitnehmersteg 23 wieder leicht ablösen kann, ist dieser im Längsschnitt trapezförmig ausgebildet, wie dies aus Fig. 4 ersichtlich ist.

Die freie Kante 24 des Mitnehmersteges 23 besitzt als Kennung für die Winkelpositionierung der Spule eine Vertiefung 25, welche an einem Ende des Steges angeordnet ist. Durch diese außermittige, in Bezug auf die Spulenachse unsymmetrische Anordnung kann bei entsprechend unsymmetrischem Antriebsschlüssel durch Abtasten der Kennung eine winkelgerechte Positionierung der Filmspule in der Konfektionierungsmaschine erreicht werden. Dies ist beispielsweise dazu erforderlich, um beim maschinellen Einschieben des Filmendes in den Spulenschlitz 5 der Filmspule 1 die einschubseitige Schlitzöffnung dem Filmtransportkanal der Konfektionierungsmaschine genau gegenüberzustellen.

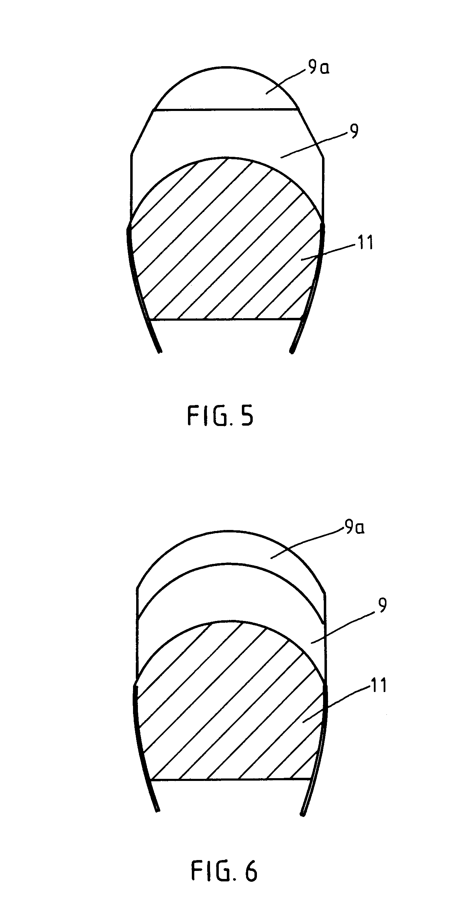

Aus Fig. 5 und 6 sind Hakenfuß 11, Hakenkopf 9 sowie die abgeschrägte Fläche 9a zu erkennen, die erfindungsgemäß (Fig. 6) so gestaltet ist, daß beliebige, parallel zur Hakenunterseite durch sie hindurchgelegte Schnitte bogenförmige Schnittlinien ergeben. Die Abschrägung weist gegenüber der Hakenunterseite vorzugsweise einen Winkel von 30 bis 60˚ auf.

**Patentansprüche**

1. Spule für bandförmige Aufzeichnungsträger, insbesondere für fotografische Filme, mit einem im Spulenkern angeordneten Schlitz und wenigstens einem darin vorgesehenen Haken zum Befestigen des in den Schlitz eingeschobenen Bandendes, wobei Ober- und Unterseite des Hakens an dem der Filmeinschubseite gegenüberliegenden Ende durch eine schräge Fläche so miteinander verbunden sind, daß der Haken zum Hakenende hin spitz zuläuft und die Hakenoberfläche länger ist als die Hakenunterseite, dadurch gekennzeichnet, daß beliebige, parallel zur Hakenunterseite durch die schräge Fläche gelegte Schnitte bogenförmige Schnittlinien ergeben.

2. Spule nach Anspruch 1, dadurch gekennzeichnet, daß die Abschrägung der schrägen Fläche gegenüber der Hakenunterseite 30 bis 60˚ C beträgt.

3. Spule nach Anspruch 1, dadurch gekennzeichnet, daß die Schnittlinien Kreisbögen sind, deren Radius gleich dem Radius des Befestigungsloches ein Bandende ist.

FIG.1

FIG.2

FIG.3

FIG.4

FIG. 5

FIG. 6